# EUROPEAN PATENT APPLICATION

(11) **EP 1 087 474 A2**
(43) Date of publication of application: **28.03.2001**
(21) Application number: 00307854.0
(22) Date of filing: 11.09.2000
(51) Int. Cl.: H01S 3/067

(54) **High power, multi-stage doped optical amplifier**

(30) Priority: 24.09.1999 US 155986 P; 08.05.2000 US 566349
(71) Applicant: LUCENT TECHNOLOGIES INC., Murray Hill, New Jersey 07974-0636 (US)
(72) Inventor: Delavaux, Jean-Marc Pierre, Pittstown, NJ 08974 (US); Yeniay, Aydin, Bethlehem, Pennsylvania 18017 (US)
(74) Representative: Watts, Christopher Malcolm Kelway, Dr.

(57) **Abstract**

A high power optical amplifier (40) with multiple outputs is formed by using a preamplifier stage (42) (such as an EDFA), followed by a power splitter/WDM router (44) (forming the desired number of M separate optical outputs). Each preamplified/split output is then separately amplified in a high power amplifier (46). , such as a erbium-ytterbium co-doped amplifier. The power loss associated with the signal splitting thus occurs prior to imparting the high power gain onto the optical signals, allowing for a plurality of high power optical outputs to be formed.

## Description

### Technical Field

The present invention relates to a high power doped optical amplifier including an rare earth-doped gain medium pre-amplifier (low noise) stage and multiple, parallel high power rare earth-ytterbium co-doped output stages, with a signal splitter/multiplexer disposed at the output of the pre-amplifier and used to supply the multiple, parallel inputs to the parallel output stages.

### Background of the Invention

In the last decade, rare-earth doped fiber amplifiers in general, and erbium doped fiber amplifiers (EDFAs) in particular, have been extensively used in optical communication systems as a means to amplify weak optical signals between telecommunications links, particularly signals at or near the 1550nm wavelength. Various designs of these amplifiers have been proposed to provide efficient performance, where efficiency is measured in terms of high optical gain, low noise figure, high output power and pump efficiency. Recently, with the use of EDFAs in applications such as multiple WDM systems and analog CATV systems, high optical power (along with low noise) has become essential in order to overcome the splitting losses and to have relatively high optical power at the receivers. High power levels can be achieved by increasing the pump power near the 980nm or 1480nm wavelengths. However, the semiconductor lasers conventionally used to emit at these wavelengths are problematic in terms of power scalability and overall lifetime.

As an alternative to providing an increased power for these newer applications, co-doping of the fiber amplifier has been proposed, where in most cases a co-doping of Er⁺³ and Yb⁺³ is used. Such a co-doping increases the amount of pump absorption and offers a flexibility in selection of the pump wavelength, owing to the broad absorption band of Yb⁺³ (from 800 to 1100nm) in glass. In glass fibers which contain phosphorus, ytterbium can absorb pump power available from diode-pumped Yb or Nd-doped laser sources near 1064nm and efficiently transfer the energy to erbium ions for power application near 1550nm. To date, several fiber amplifiers with Er⁺³-Yb⁺³ co-doping that are pumped with a 1064nm Yb or Nd-cladded pumping lasers have been demonstrated with co-, counter-, or side-pumping schemes. When using these amplifiers in WDM or CATV systems, the output power is split into many channels by means of a coupler (e.g., 1x8, 1x16 power splitters). However, problems exist with these arrangements that limit the amplifier's performance. In particular, allowing the propagation of a high power signal in a single optical fiber causes nonlinearities (such as four-wave mixing) that reduce the performance of the amplifier. Also, the amplifier output power is directly reduced by the splitting losses associated with the following splitter. Further, in situations involving even higher power levels (for example, a few watts) specially-designed optical components (e.g., high power connectors, couplers) may be required.

Thus, a need remains in the prior art for providing an optical amplifier design that is useful in high power, multiple output applications such as CATV and WDM systems.

### Summary of the Invention

The need remaining in the prior art is addressed by the present invention, which relates to a high power doped fiber amplifier including a rare earth-doped fiber pre-amplifier (low noise) stage and multiple, parallel high power rare earth-ytterbium co-doped output stages, with a signal splitter/multiplexer disposed at the output of the pre-amplifier and used to supply the multiple, parallel inputs to the parallel output stages.

In accordance with the present invention, each of the separate output amplifier paths includes a section of Er⁺³-Yb⁺³ doped fiber and has its own pump input signal applied thereto. In this arrangement, therefore, the power splitting is performed prior to the "high power" amplification in the second stage. Such an arrangement reduces the overall power loss, due to the saturation regime of the output stages and the splitting loss in the input power results in negligible loss in the output of the amplifier.

It is an aspect of the present invention that nonlinearities such as four-wave mixing (FWM) and stimulated Brillouin scattering (SBS) are less likely as a result of the equal distribution of the power among the multiple paths of the output amplifier stage.

Various and other aspects of the present invention will become apparent during the course of the following discussion and by reference to the accompanying drawings.

### Brief Description of the Drawings

Referring now to the drawings,
FIG. 1 illustrates an exemplary prior art two-stage hybrid optical amplifier;
FIG. 2 is a graph illustrating the output power variations of an Er-Yb doped fiber amplifier with respect to the input power;
FIGs. 3A and 3B contain graphs comparing an Er-Yb doped fiber amplifier to an Er doped fiber amplifier, as well as a combined stage Er/Er-Yb fiber amplifier in terms of output power and noise figure values, respectively;
FIG. 4 illustrates an exemplary two-stage doped fiber amplifier of the present invention, including an Er doped fiber preamplifier stage and a multiple path Er-Yb doped fiber output stage;
FIGs. 5-7 illustrate various alternative pump configurations for an amplifier such as illustrated in FIG. 4;
FIGs. 8-10 illustrates various preamplifier and coupler arrangements for a two-stage doped fiber amplifier such as shown in FIG. 4;
FIGs. 11 and 12 illustrate yet other embodiments of the present invention, using polarization maintaining fiber and polarization diversity in the applied signals; and
FIG.s 13 and 14 illustrate integrated waveguide embodiments of the two-stage amplifier arrangement of the present invention.

### Detailed Description

Throughout the course of the following discussion, the subject matter of the present invention will be discussed in the context of an Er⁺³-doped pre-amplifier stage and an Er⁺³-Yb⁺³ co-doped multiple, parallel output stage. It is to be understood that various other compositions are well-known in the art that may be used as dopants for either stage. For example, praseodymium is another dopant that may be used (either alone or in association with erbium or other rare-earth dopants). Various combinations are possible and all may be used in the arrangement of the present invention to provide both a "low noise" preamplifier stage and a "high power" output stage.

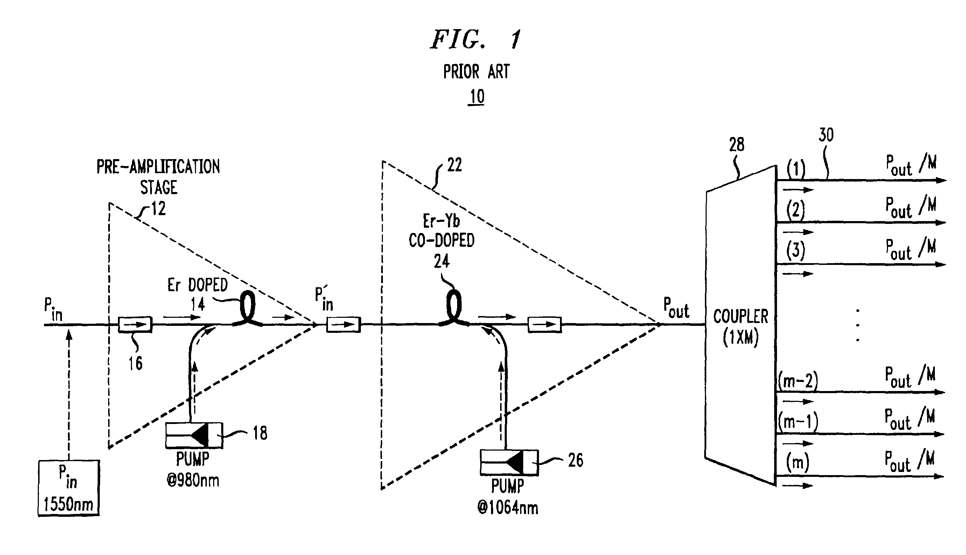

In order to best understand the principles of the present invention, it is useful to review the operation of a conventional, well-known two-stage doped fiber amplifier, where one such exemplary prior art two-stage doped fiber amplifier 10 is illustrated in FIG. 1. A pre-amplifier stage 12 comprises a section of erbium-doped fiber 14 and an input isolator 16. A pump signal at an appropriate wavelength to provide amplification (such as 980nm) is provided by a pump source 18 which is, in this example, applied as a co-propagating input to erbium-doped fiber 14. The input optical signal Pᵢₙ (at a wavelength of 1550nm) is applied as an input to pre-amplifier stage 12 by first passing through isolator 16, then entering Er-doped fiber 14. By using a co-propagating amplifying arrangement in pre-amplifier stage 12, low noise amplification is obtained. The pre-amplified output signal, denoted P'ᵢₙ in FIG. 1, thereafter passes through an intermediate isolator 20 and is applied as an input to a high power amplifier stage 22. High power stage 22 includes a section of Er-Yb co-doped fiber 24, which is known to provide higher performance (in terms of output power scalability) due to the fact that ytterbium can absorb pump power available from neodymium-doped sources near 1064nm and efficiently transfer the power to erbium ions for power application near 1550nm. A pump source 26 is illustrated as applying a counter-propagating pump signal at 1064nm to co-doped fiber 24. The high power, amplified output signal P ₒᵤₜ is then applied as an input to a 1xM splitter 28, thus creating a plurality of M output signals, each destined for a separate receiver in the system. In a preferred embodiment, 1xM splitter 28 provides equal power splitting, such that each output channel 30 carries a signal having a power of Pₒᵤₜ/M. Since each channel needs to obtain a certain amount of power in order to overcome the propagating losses, and must also exhibit a relatively high power at the receiver, the number of channels M associated with such a splitter is limited.

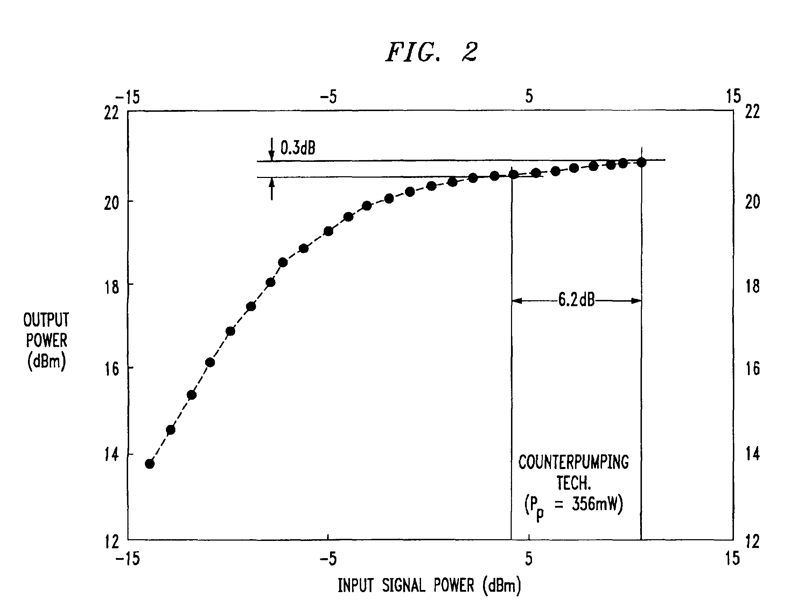

FIG. 2 is a graph of output power from a high power amplifier stage such as the prior art amplifier stage 22 of FIG. 1, in particular characterized for a 6.5m length of Er-Yb co-doped fiber amplifier, with an injected signal power (P'ᵢₙ) at 1550nm and a pump signal at a wavelength of 1060nm having an input power of 350mW. As shown, the amplifier produces as much as 21dBm output power for a 10dBm input power. The amplifier output reaches a saturation point for input power greater than 5dBm, where in the saturation regime any change in input power results in negligible change in the output power.

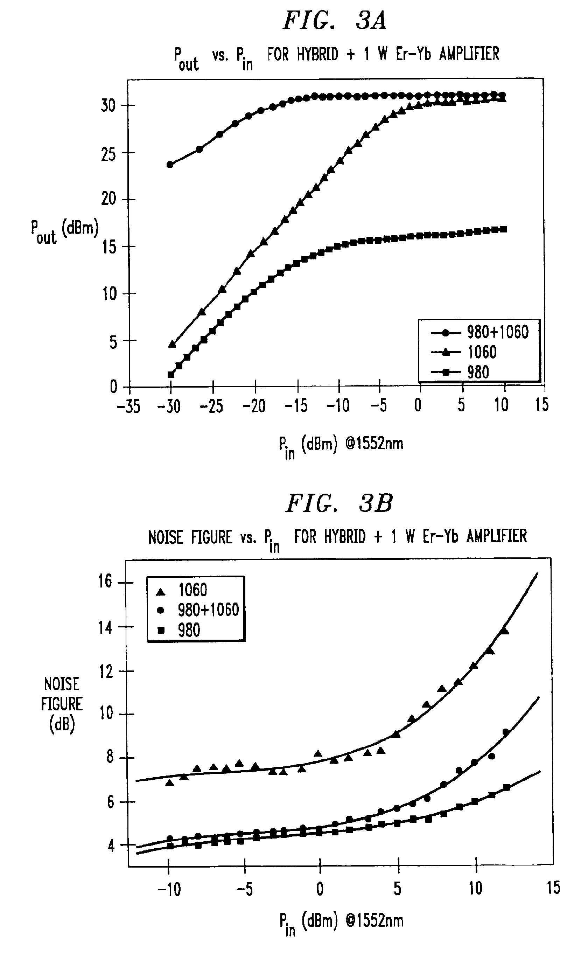

A comparison of the noise figures and output power values for the prior art arrangement of FIG. 1 to both a single stage Er doped fiber amplifier and a single stage Er-Yb co-doped fiber amplifier is shown in FIGs. 3A and B. As shown, an Er-Yb co-doped fiber amplifier produces higher power (21dBm), but with a relatively high noise figure (>10dB, external). The Er doped fiber amplifier is the opposite: lower power (16dBm), but lower noise figure (>5dB, external). Combining these two separate amplifiers into an arrangement such as amplifier 10 of FIG. 1, however, yields a design with a relatively high power (21dBm) and relatively low noise figure (<5dB, external).

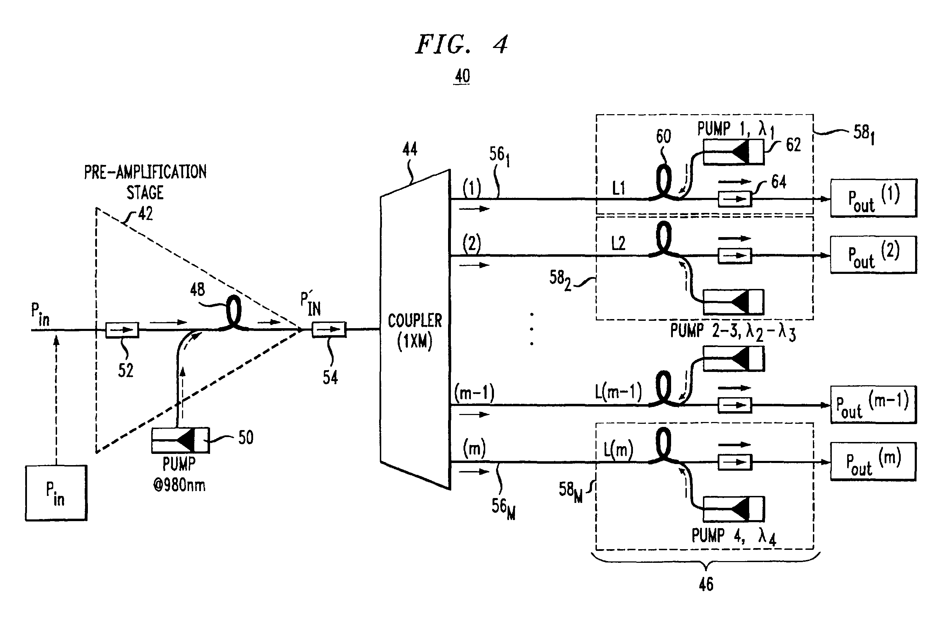

FIG. 4 illustrates an exemplary two-stage, high power doped fiber amplifier 40 formed in accordance with the present invention. As shown, amplifier 40 comprises a preamplifier stage 42, a 1xM coupler 44, and a multiple path high power amplifier stage 46, disposed in series, as shown, so as to provide for the output stage amplification to be applied separately to each signal path. In particular, preamplifier stage 42 is essentially identical to preamplifier stage 12 discussed above with the prior art amplifier 10. That is, preamplifier stage 42 includes a section of Er-doped fiber 48 and a pump source 50 for supplying a co-propagating pump signal at 980nm to fiber 48. An input isolator 52 is also included in preamplifier stage 42. The output from preamplifier stage 42, denoted P'ᵢₙ, thereafter passes through an intermediate isolator 54 and is applied as an input to 1xM coupler 44. The M output signals, propagating along output paths 56₁ - 56_{M}, respectively, are thus each slightly reduced in power (attributed to splitting loss from passing through coupler 44) when compared to the coupler input signal P'ᵢₙ. In preamplifier stage 42, high power amplifier stage 46, or any other amplifier stage discussed hereinbelow, the arrangement may comprise a "cladding fiber amplifier", defined as an arrangement wherein a fiber comprises at least two concentric cladding layers, with the pump signal injected into the inner cladding and the outer cladding used to keep the amplified energy confined to the core/inner cladding region.

In accordance with the present invention, each coupler output is then separately amplified as it propagates along its associated output path. That is, the output signal propagating along path 56₁ is provided as an input to a first parallel path amplifier 58₁, the output signal propagating along path 56₂ is provided as an input to a second parallel path amplifier 58₂, and so on, with the output signal propagating along path 56_{M} applied as an input to the M^{th} amplifier 58_{M}. For the specific embodiment as shown in FIG. 4, each amplifier 58 comprises a section of Er-Yb co-doped fiber 60, a counter-propagating pump source 62 and an optical isolator 64. In contrast to the prior art arrangement in which each amplified output signal suffers a loss related to the coupler splitting, by moving the coupler to an intermediate position in the amplifier of the present invention, the loss is experienced by the output of the preamplifier and can readily by overcome by the higher power applied by each parallel path in the output stage. For example, presuming a system is using a 1x4 coupler, a conventional two-stage amplifier design (such as that of FIG. 1) an insertion loss of 0.2dB in each channel reduces the output power by 6.2dB for each channel. In contrast, the arrangement of the present invention imparts that 6.2dB loss at the input of the output stage, resulting in lower total loss for the overall system (presuming that the output stage amplifiers operate in the saturation regime). Referring back to FIG. 2, decreasing the input power of the 6.5m Er-Yb doped fiber amplifier by 6.2dB is shown to give rise to only a 0.07dB power drop at the output when the amplifier is operated in the saturation regime. It is to be noted that each output power may be individually adjusted by modifying the associated pumping level, the fiber length, or both. Indeed, an "uneven" power distribution may be used, if desired. Automatic power control is therefore an option along each section of the power amplifier arrangements.

Additional benefits associated with the parallel amplification path arrangement of the present invention include the ability to tailor the amount/type of amplification applied to each separate path. For example, different wavelengths or pump powers may used along each branch, particularly when a wavelength division multiplexer is used as the "splitter" in the amplifier arrangement. The above-referenced nonlinearities (FWM, SBS) are also less likely to occur, as a result of the power distribution across the set of M outputs. This power distribution thus also removes the need for "high power" optical components in this output amplification stage, and may therefore reduce the failure probability along the transmission paths.

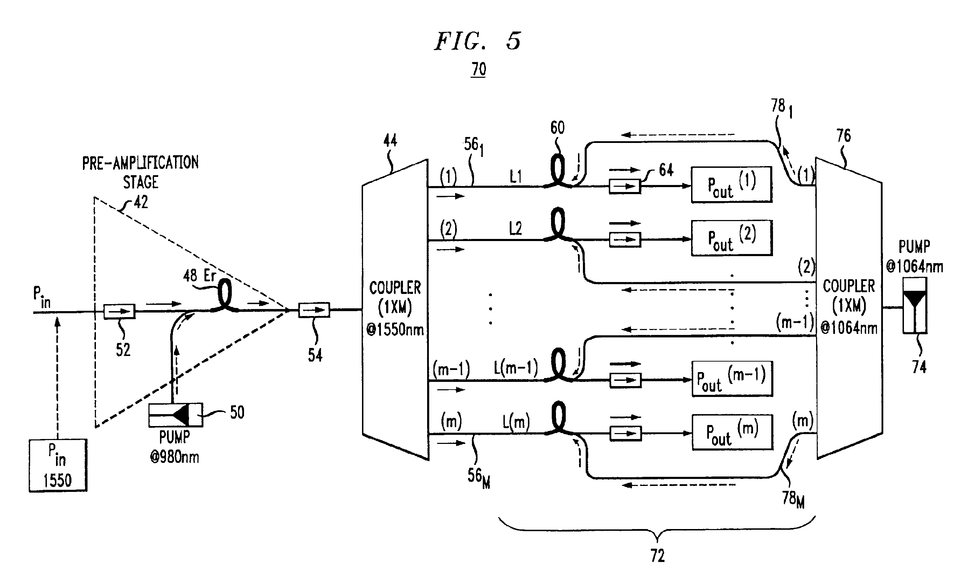

FIG. 5 illustrates an alternative amplifier arrangement 70 of the present invention, utilizing pump source splitting in the high power output stage, in contrast to amplifier 40 of FIG. 4, which uses a separate pump source for each output branch 56. It is to be noted that the preamplifier stage and 1xM coupler are essentially identical to those used in amplifier 40 of FIG. 4 and, therefore, carry the same reference numerals. Output stage 72 of amplifier 70 differs, however, in that a single pump source 74 is used to supply a counter-propagating pump signal to each branch 56₁ - 56_{M}. A second 1xM coupler 76 is coupled to the output of pump source 74 and used to provide the M separate pump signals to signal paths 78₁ - 78_{M}, each path 78 associated with a different output branch 56. Referring to FIG. 5, each signal path 78 is coupled to an Er-Yb co-doped fiber section 60 so as to provide a counter-propagating pump signal to the fiber amplifier. A natural limitation of the particular embodiment of FIG. 5 is that only a single pump wavelength can be used, where as mentioned above, one aspect of the flexibility of the arrangement of FIG. 4 is the capability of using different pump wavelengths along each path (where different pump wavelengths can be associated with the maximum absorption wavelength of the particular rare earth dopant and/or the fiber length of the amplifier). The trade-off, obviously, is in the requirement for a number of separate pump sources versus the wavelength tunability of the pump input.

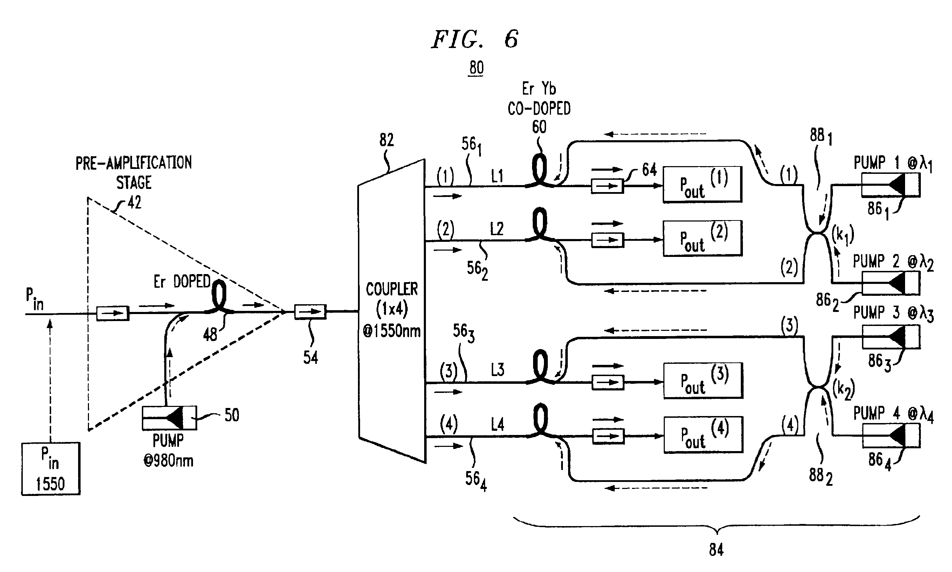

An alternative arrangement 80 of the present invention that utilizes 3dB couplers in association with a plurality of pump sources is shown in FIG. 6. As with the above embodiments, preamplifier 42 comprises a conventional EDFA arrangement. For the sake of simplicity in this particular design, a four output amplifier is described. Thus, 1xM coupler 44 of the prior embodiments is particularly illustrated as a 1x4 coupler 82 in the embodiment of FIG. 6. High power amplifier output stage 84 is illustrated as including a set of four separate pump sources, denoted 86₁ - 86₄, where each pump may emit a signal at a different wavelength (denoted as wavelengths λ₁ - λ₄ in FIG. 6). In the particular configuration of amplifier 80, the outputs from pump sources 86₁ and 86₂ are applied as separate inputs to a first 3dB coupler 88₁ and the outputs from pump sources 86₃ and 86₄ are applied as separate inputs to a second 3db coupler 88₂. Depending on the coupling coefficients k₁ and k₂ of couplers 88₁ and 88₂, different proportions of each pair of pump signals are thereafter applied as counter-propagating pump inputs to the associated Er-Yb co-doped fiber 60.

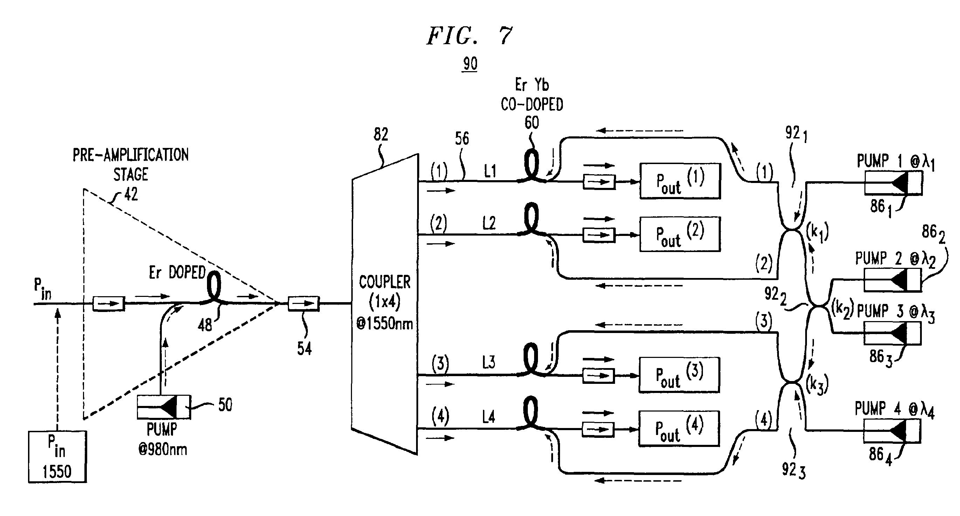

FIG. 7 illustrates an alternative to amplifier 80 of FIG. 6, where in this case a set of three 3dB couplers are used to combine the pump signal inputs to the high power output stage (in place of the 3dB couplers, an MxN cross-connected coupler may be used). As shown, amplifier arrangement 90 includes the same preamplifier 42, isolator 54 and 1x4 coupler 82 as discussed above in association with FIG. 7. The same set of four pump sources 86₁ - 86₄ are also included in this embodiment, where each source may be operating at a different wavelength. Referring to FIG. 7, the outputs from pump sources 86₂ and 86₃ are combined in a first 3dB coupler 92₁, where a first output from first 3dB coupler 92₁ is applied as an input to a second 3dB coupler 92₂ and a second output from first 3dB coupler 92₁ is applied as an input to a third 3dB coupler 92₃. The remaining input to second 3dB coupler 92₂ is the output from first pump source 86₁ and the remaining input to third 3dB coupler 92₃ is the output from fourth pump source 86₄.

These various embodiments of the high power output stage of the amplifier of the present invention are considered to be exemplary only, illustrating various arrangements for sharing pump sources among the separation parallel paths. It is to be understood that there are many other configurations of couplers and pump sources that may also be used to provide a pump signal input to each path. In each embodiment, however, it is preferred that the pump signal be applied as a counter-propagating signal to provide a high conversion efficiency in the Er-Yb co-doped fiber.

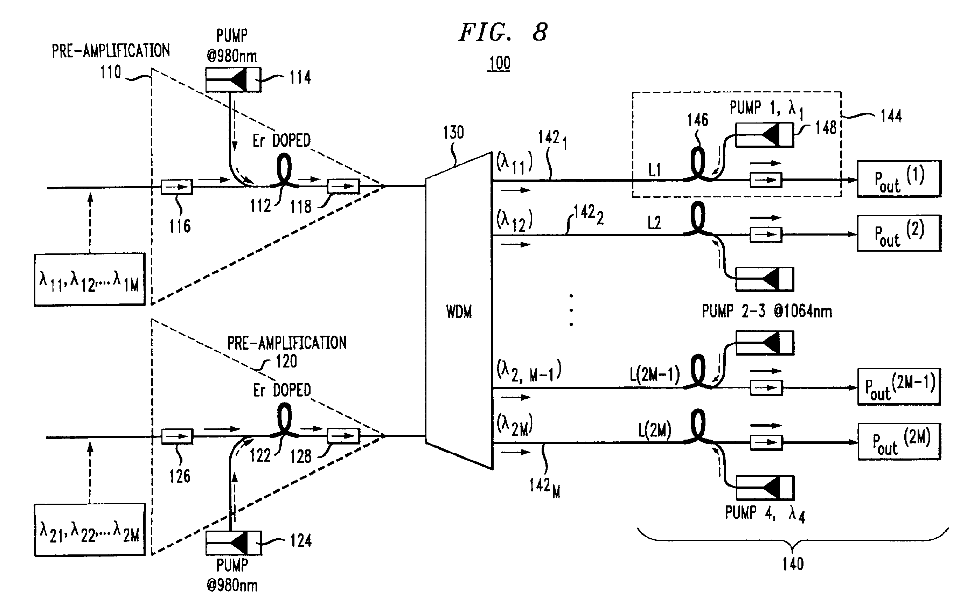

There are also various preamplifier embodiments that may be used in forming the amplifier arrangement of the present invention. FIG. 8 illustrates an exemplary amplifier 100, used with a plurality of separate input signals - each operating at a different wavelength. In this embodiment, the preamplifier includes a pair of separate, parallel amplifiers 110 and 120. A first set of input signals, denoted λ₁₁ - λ_{1M}, are applied as inputs to first amplifier 110 and a second set of input signals, denoted λ₂₁ - λ_{2M}, as applied as inputs to second amplifier 120. Referring to FIG. 8, first amplifier 110 includes a section of Er-doped fiber 112, a pump source 114, input isolator 116 and output isolator 118. As with the arrangements described above, pump source 114 is coupled to Er-doped fiber 112 so as to provide a "co-propagating" pump signal (considered to provide low noise amplification, albeit at a reduced power level). The plurality of input signals first pass through input isolator 116, are thereafter amplified within Er-doped fiber section 112, and pass through output isolator 118 to exit first amplifier 110. In a similar arrangement, second amplifier 120 comprises a section of Er-doped fiber 122, a pump source 124, input isolator 126 and output isolator 128.

The plurality of amplified input signals produced by first and second amplifiers 110 and 120 are thereafter applied as inputs to a wavelength division multiplexer 130, where multiplexer 130 is used as the "splitter" between the preamplifier stage and high power stage 140 of amplifier 100 of the present invention. Wavelength division multiplexer 130 functions to launch each of the preamplified signals onto a separate signal path 142, where as described above, each signal path includes a high power amplifier 144. In this particular embodiment, each amplifier 144 comprises a section of co-doped Er-Yb fiber 146, counter-propagating pump source 148 and output isolator 150. It is an advantage of this particular arrangement that the use of separate pump sources 148 in each amplifier 144 allows for the pump wavelength (as well as the physical length of the co-doped fiber section) to be particularly chosen to provide optimum amplification for the particular signal wavelength.

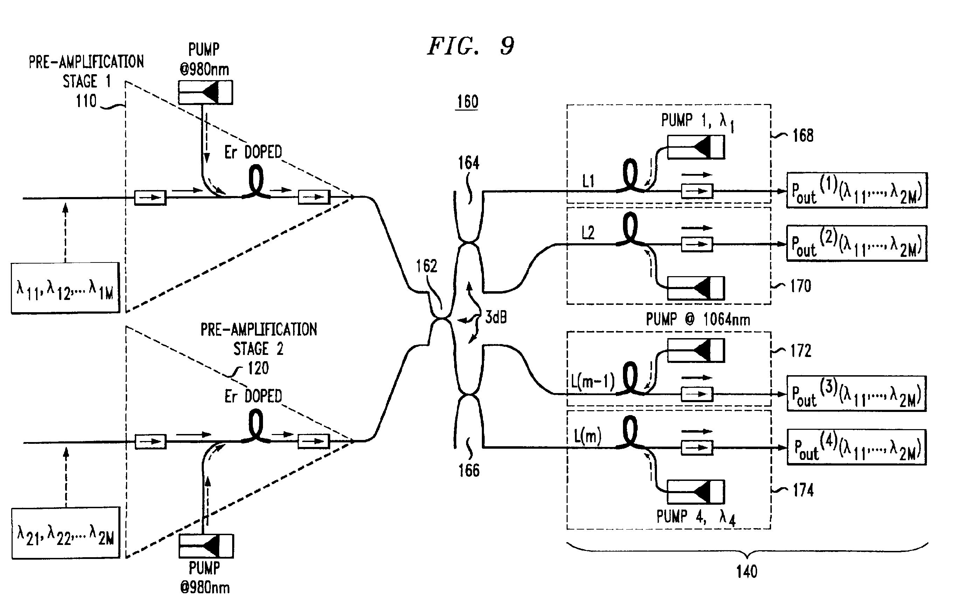

FIG. 9 illustrates an alternative amplifier arrangement 160 which also utilizes a number of separate input signals. In this case, wavelength division multiplexer 130 of FIG. 8 is replaced by a plurality of 3dB couplers 162, 164, and 166. As shown, the output from preamplifiers 110 and 120 are first coupled together, then split by first 3dB coupler 162. Half of the power of these signals is then sent to a second 3dB coupler 164 which thereafter splits these signals into two high power amplifier paths, denoted 168 and 170 in FIG. 9. The remaining portion of the amplified signal is thereafter split by a third 3dB coupler 166 and applied as separate inputs to two high power amplifiers, denoted 172 and 174. In contrast to the arrangement of FIG. 8, all of the input wavelengths appear along each branch of the high power output amplifier in the particular design of amplifier 160 of FIG. 9.

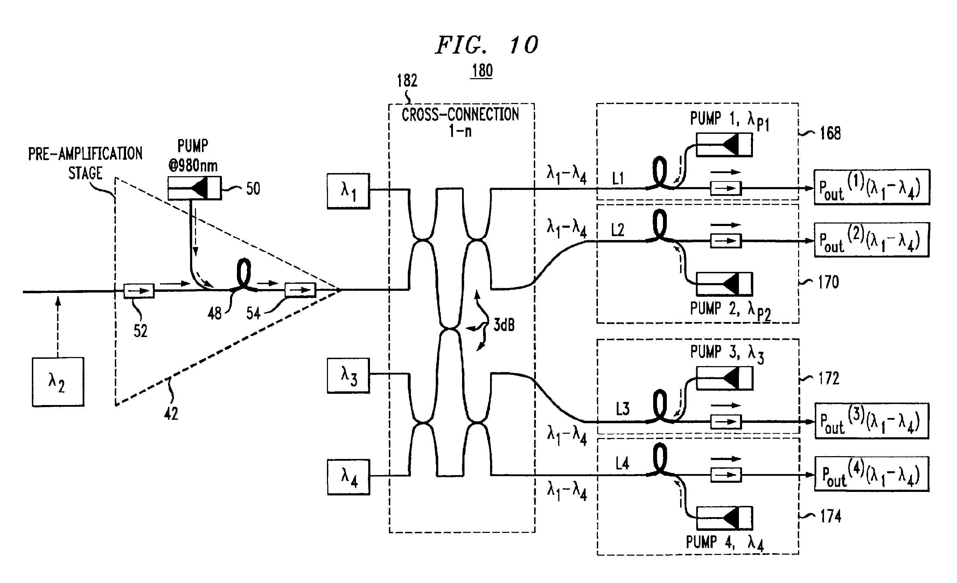

FIG. 10 illustrates a particular embodiment of the present invention for use with a set of four input signals, operating at wavelengths λ_{1,} λ₂, λ₃ and λ₄. In this case, only the signal operating at wavelength λ₂ is preamplified, such as through a preamplifier 42 as described above. The four separate inputs (including the one amplified input) are thereafter applied as separate inputs to a cross-connection arrangement 182, which comprises a plurality of 3db couplers arranged as shown. In this fashion, each output from cross-connection arrangement 182 will comprise a portion of each input signal, where a set of four separate outputs are formed. As with the arrangement described above in FIG. 9, therefore, a set of four separate high power amplifiers can be used to provide the needed amplification to each wavelength. Amplifiers 168, 170, 172 and 174 are illustrated as coupled to the separate outputs from cross-connection arrangement 182.

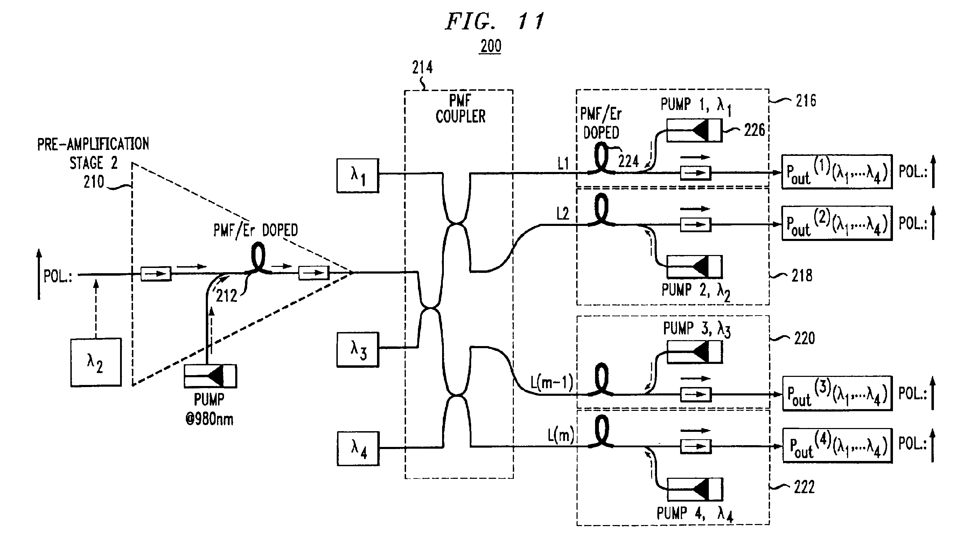

FIG. 11 illustrates an alternative embodiment of the arrangement as discussed above in FIG. 10, where in this case the polarization of each input signal is known and controlled throughout the amplification process. In particular, amplifier 200 includes a preamplifier stage 210 that utilizes a section of polarization maintaining Er-doped fiber 212 to amplify the input signal propagating at wavelength λ₂. A polarization maintaining coupler 214, comprising a plurality of polarization maintaining 3dB couplers, is used to couple together both the amplified signal at wavelength λ₂ and the remaining input signals at wavelengths λ₁, λ₃ and λ₄. The four outputs from coupler 214 are then applied as separate inputs to a set of four high power amplifiers 216, 218, 220 and 222. Each high power amplifier comprises a section of polarization maintaining Er-Yb co-doped fiber 224 and a separate counter-propagating pump source 226. By utilizing polarization maintaining components throughout amplifier 200, the polarization state of the input signal propagating at wavelength λ₂ will be preserved and appear in the amplified output signal from each high power amplifier.

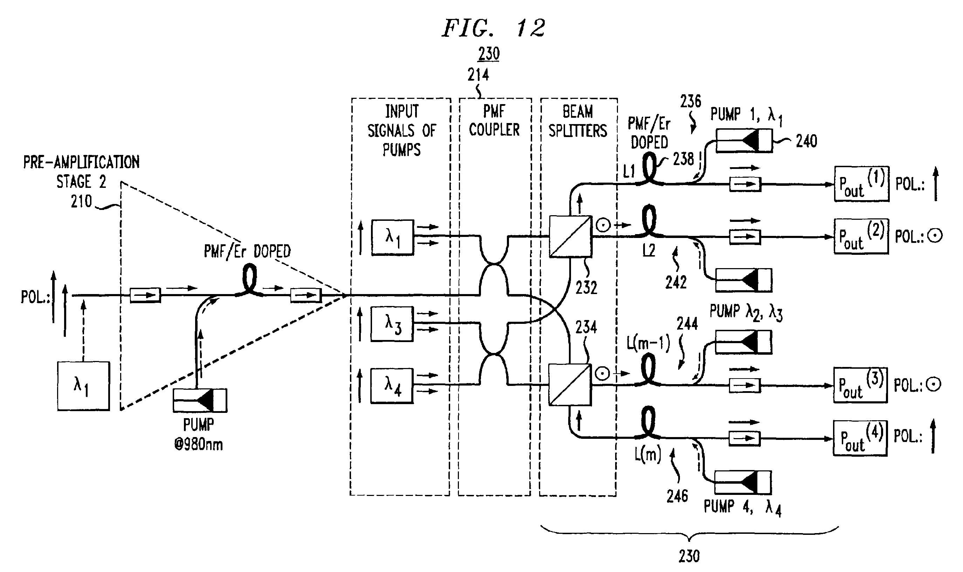

An alternative amplifier 230, illustrated in FIG. 12, can be used with a plurality of polarized input signals, operating at wavelengths λ₁ - λ₄, where as in the embodiment discussed above, the signal operating at wavelength λ₂ is first amplified by a polarization maintaining preamplifier 210. The four polarized input signals subsequently pass through polarization maintaining coupler 214 and are thereafter applied as polarized inputs to the high power amplification portion of amplifier 230. In the particular embodiment as shown, a pair of beam splitters 232 and 234 are coupled to the output of polarization maintaining coupler 214 and used to form separate inputs for each of a set of four high power amplification branches. For example, first beam splitter 232 functions to coupled a first polarization state of the signals to a first high power amplifier 236, where amplifier 236 includes a section of polarization maintaining Er-Yb co-doped fiber 238 and counter-propagating pump source 240. The orthogonal polarization output from first beam splitter 232 is applied as an input to a second high power amplifier 242, which includes a similar section of polarization maintaining co-doped fiber and pump source. Second beam splitter 234 similarly splits the input signals into orthogonal polarizations and applies these signals to high power amplifiers 244 and 246.

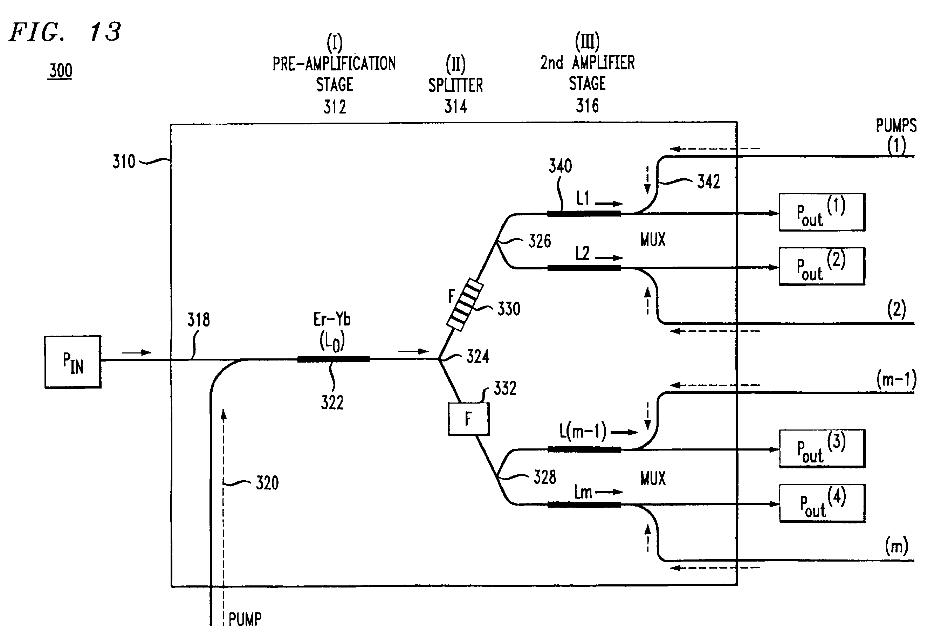

The embodiments as discussed above usually comprise a plurality of discrete components. It is also possible to form an amplifier of the present invention in an integrated amplifier arrangement, such as amplifier 300 illustrated in FIG. 13. In this form, the various optical components are formed on and within an optical substrate 310, including a preamplification stage 312, signal splitting stage 314 and high power amplification stage 316. Referring to FIG. 13, an input signal is coupled into a first input waveguide 318 and a co-propagating pump signal is applied as an input to a second input waveguide 320. Waveguides 318, 320 are then coupled into an Er-doped waveguide section 322, which provides the preamplification of the input signal (alternatively, a semiconductor optical amplifier could be used in place of the Er-doped waveguide section). Integrated splitter 314 includes, in this embodiment, a set of Y-connected waveguide sections, denoted by reference numerals 324, 326 and 328, which function to simply split the input signal into separate output components. Along a first split formed after Y-connection 324, an integrated filter element 330 is disposed, where a similar filter element 332 is positioned along the remaining Y-branch. Any desired number of such splits may be so formed. High power amplification section 316 includes a plurality of co-doped Er-Yb waveguide sections 340, with a separate counter-propagating pump source coupled into a waveguide 342 which thereafter couples with its associated co-doped waveguide section 340.

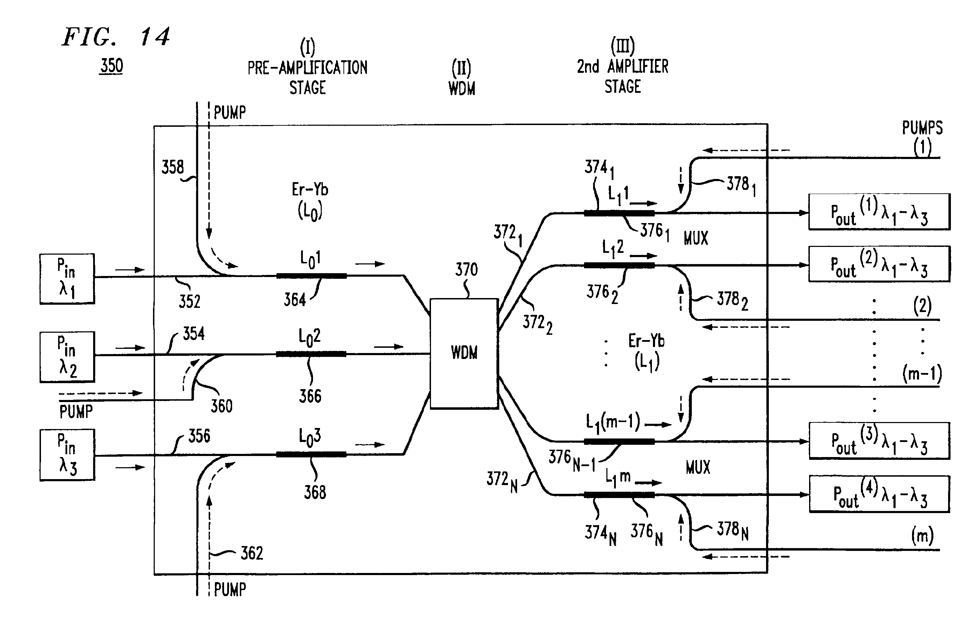

An integrated embodiment of the present invention may also be used with a multiple wavelength arrangement. FIG. 14 illustrates an integrated amplifier arrangement 350, where a set of three separate input signals, at wavelengths λ₁, λ₂ and λ₃ are applied as separate inputs along waveguides 352, 354 and 356, as shown. In this embodiment, a set of three separate co-propagating pump sources are used in the preamplification stage, with a first pump signal injected onto a waveguide 358 and coupled with the first input signal along waveguide 352. A second pump signal is injected onto a waveguide 360 and coupled with the second input along waveguide 354 and, lastly, a third pump signal is injected onto a waveguide 362 and coupled with the third input along waveguide 356.

Preamplification is provided, as shown, along three separate paths, with the first input and pump sources coupled into a first Er-doped waveguide section 364, the second input and pump coupled into a second Er-doped waveguide section 366, and, lastly the third input and pump signals are coupled into a third Er-doped waveguide section 368. The three preamplified signals are thereafter applied as separate inputs to an integrated wavelength division multiplexer 370, where multiplexer 370 comprises, in this embodiment, a 3xN multiplexer capable of forming a plurality of N output signals from the set of three input signals. The N outputs are applied, as shown to a plurality of N output waveguides 372₁ - 372_{N}, each waveguide 372 applied as an input to a different high power amplification branch 374. In this particular embodiment, each high power amplification branch 374 includes a co-doped Er-Yb waveguide section 376 for providing amplification and a separate pump source 378, with a waveguide 380 used to apply the pump signal as a counter-propagating signal into co-doped waveguide section 376.

These two integrated amplifier embodiments are considered to be exemplary only, where the various pump source sharing variations discussed above in the discrete embodiments are equally applicable to the integrated versions. In general, the scope of the present invention is considered to be limited only by the claims appended hereto.

## Claims

1. An optical amplifier comprising
a preamplifier stage including a rare earth-doped gain medium and an optical pump source, said preamplifier stage for receiving at least one optical input signal and generating a predetermined amount of optical gain for said at least one optical input signal and providing as an output at least one preamplified optical output signal;
an optical signal splitter for receiving at its input the at least one preamplified optical output signal from said preamplifier stage and forming a plurality of M separate preamplified output signals; and
a plurality of M separate high power optical amplifiers, each amplifier responsive to a separate one of the plurality of M preamplified output signals and comprising a rare earth-ytterbium co-doped gain medium and an optical pump source for providing a high power optical signal to the preamplified signal passing therethrough

2. An optical amplifier as defined in claim 1 wherein the preamplifier pump source is coupled to the rare earth-doped gain medium so as to provide a co-propagating pump signal with respect to the propagation direction of the at least one optical input signal

3. An optical amplifier as defined in claim 1 wherein each high power pump source is coupled to its associated co-doped gain medium so as to provide a counter-propagating pump signal with respect to the propagation direction of its associated preamplified optical signal passing therethrough

4. An optical amplifier as defined in claim 1 wherein
the preamplifier pump source is coupled to the rare earth-doped gain medium so as to provide a co-propagating pump signal with respect to the propagation direction of the at least one optical input signal; and
each high power pump source is coupled to its associated co-doped gain medium so as to provide a counter-propagating pump signal with respect to the propagation direction of its associated preamplified optical signal passing therethrough

5. An optical amplifier as defined in claim 1 wherein each high power amplifier comprises a separate pump source.

6. An optical amplifier as defined in claim 5 wherein at least two pump sources of the plurality of M pump sources operate at different pump wavelengths.

7. An optical amplifier as defined in claim 1 wherein a plurality of pump sources less than the plurality of M high power amplifiers is used in combination with a signal splitting arrangement to provide separate pump signals to each high power amplifier of the plurality of M high power amplifiers.

8. An optical amplifier as defined in claim 7 wherein a single pump source and an NxM splitter is used to provide separate pump inputs to each high power amplifier in the plurality of M high power amplifiers

9. An optical amplifier as defined in claim 1 wherein the at least one input optical signal comprises a plurality of N optical signals, each associated with a different wavelength λ₁ - λ_{N}.

10. An optical amplifier as defined in claim 9 wherein at least two separate preamplifier arrangements are used in parallel to preamplify the plurality of N input optical signals

11. An optical amplifier as defined in claim 10 wherein the optical signal splitter comprises a wavelength division multiplexer for receiving as inputs the preamplified outputs from the at least two separate preamplifier arrangements and providing each preamplified input signal as a separate input to one of plurality of M high power amplifiers.

12. An optical amplifier as defined in claim 1 wherein the amplifier comprises discrete components including a rare earth-doped fiber as the preamplifier gain medium and a rare earth-ytterbium co-doped fiber as the gain medium in each high power amplifier of the plurality of M high power amplifiers

13. An optical amplifier as defined in claim 1 wherein the amplifier is formed as an integrated component including a rare earth-doped optical waveguide as the preamplifier gain medium and a plurality of M co-doped waveguides as the high power amplifier gain media, wherein the input signals and pump signals are injected into optical waveguides coupled to the associated gain medium

14. An optical amplifier a defined in claim 1 wherein the pre-amplifier comprises an erbium-doped amplifier

15. An optical amplifier as defined in claim 14 wherein the erbium-doped pre-amplifier comprises an erbium-doped fiber amplifier

16. An optical amplifier as defined in claim 1 wherein at least one amplifier in the plurality of M separate high power optical amplifiers comprises an erbium-ytterbium co-doped amplifier.

17. An optical amplifier as defined in claim 16 wherein each amplifier in the plurality of M separate high power optical amplifiers comprises an erbium-ytterbium co-doped amplifier

18. An optical amplifier as defined in claim 16 wherein at least one erbium-ytterbium co-doped optical amplifier comprises an optical fiber amplifier.
